Europäisches Patentamt

European Patent Office

Office européen des brevets

(19)

(11) **EP 1 533 114 A2**

(12) **EUROPEAN PATENT APPLICATION**

(43) Date of publication:
**25.05.2005 Bulletin 2005/21**

(51) Int Cl.⁷: **B32B 5/26**, D06N 7/00,
E04F 15/10

(21) Application number: **04078473.8**

(22) Date of filing: **13.10.1998**

(84) Designated Contracting States:
**AT BE CH CY DE DK ES FI FR GB GR IE IT LI LU
MC NL PT SE**

(30) Priority: **14.10.1997  US 62085 P**
**04.06.1998  US 87991 P**

(62) Document number(s) of the earlier application(s) in
accordance with Art. 76 EPC:
**98953403.7 / 1 023 485**

(71) Applicant: **INTERFACE, INC.**
**Atlanta, Georgia 30339 (US)**

(72) Inventor: **The designation of the inventor has not
yet been filed**

(74) Representative: **Weston, Robert Dale et al
PHILLIPS & LEIGH
5 Pemberton Row
London EC4A 3BA (GB)**

Remarks:
This application was filed on 22 - 12 - 2004 as a
divisional application to the application mentioned
under INID code 62.

(54) **Floor covering with woven face**

(57)    A composite face cloth (118) for a stabilized floor covering comprises a woven fabric top layer (12,112) bonded to a stabilizing substrate (114); the woven fabric top layer may be nylon, polypropylene or polyester yarn and the stabilizing substrate may be fiberglass, non-woven fiberglass fleece, ceramic fiber, polyester, a PET/polyester blend or a PET/nylon blend, glass, polypropylene, nylon, natural fiber.

**FIG 1**

EP 1 533 114 A2

**Description**

**Field of the Invention**

This invention relates to floor coverings, including carpet and carpet tile and resilient sheet and tile products such as vinyl flooring.

**Background of the Invention**

**Floor Coverings Generally**

Myriad materials have been used for flooring and floor coverings in buildings, including virtually every natural and human-made material imaginable, such as wood, stone, concrete, cork, plastics, paint, carpets, rugs, vinyl sheets and tiles, sawdust, rushes, and animal skins, to name just a few. Rugs and carpets in a wide variety of materials, patterns and constructions have been manufactured for centuries, particularly for use in homes. As recently as the middle of the twentieth century, carpets and rugs were virtually never used in commercial and industrial buildings like manufacturing facilities, stores and offices. Floors in such locations utilized "hard surface" materials like concrete, concrete compositions, wood or sheet materials like linoleum. Beginning in approximately the late 1960's and 1970's, carpet and carpet tiles began to be used extensively in commercial and "light" industrial buildings, a trend that was accelerated by the advent of new carpet technologies that provided more durable and attractive products and by the popularity of "open" floor plan offices.
As a result of these developments, the comfort and aesthetic appeal of carpet and carpet tile have come to be widely expected in offices and other commercial environments.

**Carpets and Rugs**

Carpet and rug products have unquestionably provided substantial aesthetic benefits in commercial settings. They nevertheless have drawbacks. They are high maintenance products that are easily soiled, difficult to clean and slow to dry when cleaned with water or other solvents. Carpet and rug products wear fairly rapidly, requiring frequent replacement. Such products are easily marked by furniture and other concentrated loads and typically do not easily accommodate wheeled traffic like carts and furniture with caster wheels.
Many of these considerations have motivated reassessment of "hard" surface floor materials. Users of commercial buildings have learned, however, to appreciate and desire the beauty, color range and design versatility of textile fiber flooring products like carpet, carpet tile and rugs.
Despite the enormous variety of prior carpet and rug structures, none exhibit all of the desirable qualities of durability, service and design flexibility desired in every application. This is in part because all conventional carpet and rug structures utilize rug or carpet yarn positioned (at least in part) in an upstanding orientation so that "cut" yarn ends or uncut loops provide the visible wear surface. This is graphically illustrated in *Encyclopedia of Textiles* (2nd ed. 19172, Prentice-Hall, Inc.) at p. 491, where the constructions of several types of carpet are illustrated.
Among other constructions, carpet and rug products have been manufactured with an upper surface or face utilizing hand knotting techniques, tufting, carpet weaving (e.g., Axminster, Chenille, Velvet and Wilton weaving), and fusion bonding. As a general proposition, higher quality carpet and rug structures have utilized thicker or heavier woven fabrics containing yams that are longer and/or more densely packed, thereby contributing to heavy "face weights." Such heavy face weight carpet and rug structures provide desirable feelings of "depth" and good wear characteristics. However, heavy face weight carpets and rugs are expensive, are typically easily crushed by concentrated loads, utilize substantial quantities of yarn, and are time consuming and somewhat difficult to produce. Particularly difficult to produce are some sophisticated patterns utilizing different color yarns. Moreover, typical loop or cut pile carpet structures derive little or no strength from the face yarn itself; such strength must typically be provided by unseen yarns, backings or other structures.
A few prior flooring products have used woven "flat" fabrics as a top layer with limited success, such as German Patent number DE 196 00 724 U1, which discloses a flooring product having a "wear layer" on top that is a flat woven or knitted fabric.
Furthermore, historically, virtually all prior carpet and rug products have been manufactured with concern principally for cost, aesthetics and performance, and with little or no concern for the resources required to provide such components or the destination or reuse of the components after the product is removed from service.

**Fibers**

Fibers have been formed from a number of different fibers, including nylon, polyolefins like polyethylene and polypropylene, and polyesters, and in particular aromatic polyesters, for some time. Thermoplastic polyesters account for a large proportion of total fiber production. By comparison to nylon, thermoplastic polyesters tend to be white, tend to be more resistant to photo oxidative yellowing, tend to have lower moisture uptake, and tend to be more dimensionally stable.

Two typical thermoplastic polyesters, whose development is intimately tied in with fiber production, are poly (ethylene terephthalate), known as PET or 2GT, and poly(butylene terephthalate), known as PBT or 4GT.

**PET**

PET is a polymer of the ester formed from the aromatic dicarboxylic acid, terephthalic acid (TA), and the aliphatic polyol, ethylene glycol (EG). Development of PET production has followed two basic paths which were at least partly dictated by the need for extremely pure starting materials to avoid chain termination or branching during polymerization. The first path makes use of a chemical process known as transesterification. TA can be produced by oxidation of p-xylene. This process, however, yields numerous impurities, and separation of pure TA per se from the reaction mixture is difficult. To resolve this problem, the TA is converted to a more easily separable ester, such as the dimethyl ester, dimethyl terephthalate (DMT). This ester is then separated, purified, and transesterified with ethylene glycol, to form low molecular weight polyester prepolymers (e.g., linear oligomers) and bishydroxyalkyl terephthalate esters. These materials are then "polycondensed" to form the higher molecular weight PET polymer. In effect, the prepolymers and esters are polymerized with the elimination of the dihydric alcohol moieties, resulting in a much higher molecular weight polymer. Typically, the initial esterification, transesterification, and polycondensation processes are equilibrium reactions that are accelerated and driven toward completion by catalysis and removal of water, diol, or alcohol, respectively. Accordingly, the reaction vessel used for polycondensation should be one that permits glycol to escape easily from the polymerizing mass. Designs ranging from falling strands and disk-ring film generators to twin-screw agitators have been used.

As processes for producing more purified TA have been developed, processes for producing PET by direct esterification with ethylene glycol, followed by polycondensation, have become predominant. These processes are advantageous because the transesterification catalyst can be eliminated, which can avoid thermal stability problems, methanol can be replaced with water as the condensation agent, and higher molecular masses can be obtained. In addition, direct esterification at normal pressure can be achieved using precondensate as the reaction medium. This process lends itself readily to continuous production. The polycondensation step is analogous to that used in the transesterification process.

In either process, the ethylene glycol used is generally obtained by catalytic oxidation of ethylene, followed by acid hydrolysis of the resulting epoxide. The ethylene glycol should be pure and free from color forming impurities, and from traces of strong acids and bases.

The quality of the PET obtained by either process is a function of the occurrence (or lack of occurrence) of secondary reactions during polycondensation, including ether formation to produce polyoxyalkylene moieties (which can adversely affect dyeing behavior, lower thermal and ultraviolet stability, and decrease fiber strength), dehydration of glycols to form aldehydes or furans (which can cause the formation of branched or crosslinked products or gel particles, as well as discoloration), ester pyrolysis (which produces decreased hydrolysis resistance or discoloration), and adjacent carboxyl group ring formation.

When the desired melt viscosity is reached, the polycondensation is quenched (for instance by discharge of the melt from the reactor under a blanket of inert gas, extrusion as a ribbon, strands, fibers, etc., and water quenched). Polymer that is not extruded directly into fiber form may then be either processed into pellets or chips for subsequent melting and fiber forming, or directly extruded into fibers if the polymerization process is continuous.

**PBT**

PBT is formed by polymerizing the ester of TA and 1,4-butanediol. PBT is produced by processes analogous to those used for PET production, with a heavier current reliance on transesterification of DMT. The main byproduct of this process is tetrahydrofuran (THF), which results from dehydration of the 1,4-butanediol.

**PET and PBT Properties**

Both PET and PBT are partially crystalline polymers having high hardness and rigidity, good creep strength, high dimensional stability, and good slip and wear behavior. PET undergoes slow crystallization sometimes requiring a nucleating agent or crystallization accelerator. Both are also recyclable, using various techniques, including remelt extrusion, hydrolysis, alcoholysis, glycolysis, and pyrolysis. PBT products tend to have higher molecular masses than PET products after polycondensation. PBT accepts dispersed dyes more easily and has better resilience and elastic recovery properties than PET. PBT has physical properties that more closely resemble nylon than does PET. However, the high cost of 1,4 butanediol has restricted the growth of PBT as a commercial fiber. As an example, PBT carpet fiber was commercialized in the 1970's by Hoechst AG, but achieved limited success due to cost.

## PTT

Another aromatic thermoplastic polyester suitable for fiber use is poly(trimethylene terephthalate), known as PTT or 3GT. This polymer results from the polymerization of TA and 1,3-propanediol, and has become commercially feasible due to the development of more efficient processes for production of 1,3 propanediol. PTT melts at around 228 °C and has a glass transition temperature between 45 °C and about 90 °C, depending on the degree of crystallinity, which is typically around 50%. It can be extruded at temperatures of around 255 °C to around 270 °C, which can be handled by standard carpet fiber extrusion machines, and is thermally stable in melt extrusion. The polymer has low moisture absorption, and is suitable for carpet fibers because of its exceptional resistance. However it crystallizes very readily.

Fibers made from PTT tend to have better elastic recovery than fibers made from either PET or PBT, and PTT does not exhibit the irreversible deformation that can be found with PET. PTT fibers have an ability to recover from bending similar to that of nylon fibers. PTT is also heat settable, and has a stable crimp, due to its glass transition temperature, which is above room temperature. PBT, by contrast, is not heat settable.

While exhibiting desirable physical characteristics similar to those of nylon, PTT has better dyeing and staining properties than does nylon. Like PET and PBT, PTT is without dye sites for acid dyes, and so is resistant to most staining materials. PTT has a glass transition temperature lower than that of nylon (although still above room temperature). This allows PTT to disperse dye at atmospheric boil without a carrier. In addition, PTT fibers appear to have a more uniform dye ability than nylon because their dye uptake is relatively insensitive to the bulk and twist of the fibers, and to the process and heat setting conditions of their production. PTT fibers have a disperse dye uptake temperature of around 60°C, which is sufficiently low to allow dyeing at atmospheric boil, as discussed above, but sufficiently high to provide resistance to staining by hot stains, such as hot coffee. In this respect, PTT is superior to Nylon 6 and Nylon 6,6, both of which are easily stained at low temperatures if they are not provided with additional stain protection. PTT exhibits superior stain resistance to all but oily stains, such as motor oil and shoe polish.

## PDCT

Another thermoplastic polyester used for certain fibers is poly (1,4-dimethylenecyclohexane terephthalate), or PDCT. This can be produced in a manner similar to that used for PET and PBT, by transesterifying DMT with 1,4-cyclohexanedimethanol (itself produced by exhaustive hydrogenation of DMT). The result is a crystalline polyester with a higher melting point than PET. This material was sold as fiber under the trade name KODEL.

## Modifications of Aromatic Polyesters

The aromatic polyesters described above can be condensed with co monomers during production in order to modify or enhance their properties, including dye ability, elasticity, pilling behavior, shrinkage, hydrophilicity, flame resistance, etc. Additives that increase the amorphous content of the polymer, such as adipic acid, isophthalic acid, and diethylene glycol, enhance dye ability. The use of adipic acid to increase the disperse dye ability of terephthalate polyester fibers is disclosed in U.S. Patent No. 4,167,541, which is hereby incorporated by reference. Salts of sulfoisophthalic acid create sites for adhesion of ionic dyes. Phosphorus compounds or bromine compounds can be added to provide flame retardancy. Polyethylene glycol (PEG) or organic sulfonates can increase hydrophilicity. PEG, carbon, and metals can affect antistatic properties. Cross linking agents can increase pill resistance by reducing tensile properties. However, the addition of co monomers can have drawbacks, such as decreased fiber strength and thermal stability, that must be balanced against these advantages.

The raw polymers may also be compounded with additives such as nucleating agents, optical brighteners, fillers, flame retardants, stabilizers, and pigments, including delustrants to remove shininess from the resulting polymer. The polymers may also be blended with other polymer materials, such as bisphenol-A-polycarbonate, polyurethanes, polycaprolactones, etc. The compounded polymers may then be remelted and further processed into fibers or filaments.

## Other Fiber-Forming Polyesters

Analogous thermoplastic polyesters have been prepared using naphthalene-2,6-dicarboxylic acid (NDA), such as poly(ethylene-2,6-naphthalene-dicarboxylate), or PEN, which has been used in films and fibers. The NDA analog of PBT is poly(1,4-butylene naphthalene-2,6-dicarboxylate), or PBN. NDA requires a more complex synthesis than TA, involving air oxidation of 2,6-dimethylnaphthalene, which is itself produced by the catalytic cyclization and dehydrogenation of a reduced, dehydrated butyrophenone. This is obtained by reacting toluene with carbon monoxide and butene in HF and $BF_3$, then reducing to the carbinol and dehydrating to the olefin.

Additional polyesters that can be used to form fibers according to the present invention may desirably include polyesters available from renewable agricultural or other resources, such as vegetable or animal material, biomass, etc. For example, fibers formed of polylactic acid, such as Kanebo LACTRON polylactic acid fiber, can be used in the present invention. PLA resins are composed of chains of lactic acid, which can be produced by converting starch from corn and other plant products into sugar and then fermenting. Water is then removed to form lactide, which is converted into PLA resins using a solvent-free polymerization. PLA polymers are expected to compete with hydrocarbon-based thermoplastics on a cost/performance basis. They provide good aesthetics (gloss and clarity) and processability similar to polystyrene. They also exhibit tensile strength and modulus comparable to certain hydrocarbon-based thermoplastics. PLA polymers are similar to polyethylene terephthalate (PET), in that they resist grease and oil. These polymers can be processed by most melt fabrication techniques including thermoforming, sheet and film extrusion, blown film processing, fiber spinning and injection molding. PLA polymers are also advantageous because they are biodegradable.

## Fiber Formation

The techniques of fiber formation and yarn formation described below are generally applicable to many types of polymer fibers, in particular to many types of polyester fibers, including those described above, with appropriate modifications as would be apparent to those of skill in this art.

Fiber formation, as described above, may occur directly after polycondensation of the polyester, or after the polymer has been quenched and processed into chips, pellets, etc. and remelted. This intermediate formation into solid form and remelting may sometimes be desirable to adjust the properties of the polymer, e.g., by solid phase polymerization processes to increase molecular weight, increase the degree of crystallization, and decrease the amount of volatiles present in the product.

Fiberization of the polymer, whether occurring just after polycondensation, or after an intermediate solidification and remelting, may involve a number of different steps having significant impact on the structure and properties of the fibers that result. High throughput spinning processes, such as those used for producing staple and high tex industrial filament, generally use polymer direct from the polycondenser. Lower tex processes are generally fed from an extruder that melts and extrudes chipped polyester. Typically, the melted polymer is extruded or spun through a spinneret, forming filaments that are solidified by cooling, typically in an air current. The spun fiber is drawn, i.e., the filaments are heated to a temperature generally above their glass transition temperature and well below the melting point, and stretched to several times their original length. This helps to form an oriented semi crystalline structure and to impart desired physical properties, as discussed in more detail below. Drawing of polyester fibers may be conducted after dyeing, as disclosed in U.S. Patent No. 5,613,986 which is hereby incorporated by reference.

More particularly, the polymer melt (for PET, typically at a temperature of between about 285°C and about 295°C, more typically around 290°C; for PTT, typically at a temperature of between about 245° and about 285°C) is extruded and fed to a pump, such as a low slip gear pump. The pump meters and pressurizes the flow of polymer through a spin pack. The spin pack is typically a container, a portion of which is a spinneret having a number of small holes, which are typically round having a diameter of about 0.20 to about 0.45 mm, and a length to diameter ratio of about 1.5 : 1 or larger. The spin pack is generally maintained at a uniform temperature by enclosure in a heated manifold. The polymer melt passing through the spinneret holes is in the form of filaments that are then air cooled by forced air convection in a quenching chimney or some other similar apparatus. The cooling air is controlled for velocity, velocity profile, temperature, and humidity, as these conditions can affect short term mass flow and the uniformity of orientation of the yarn. For filament yams, the airflow should be laminar flow, and perpendicular to the filament flow in a cross flow pattern or should be applied in a radial flow pattern. For staple fiber, turbulent or laminar flow can be used, and a variety of directions of air flow may be suitable. Solidification generally occurs within about 0.2 to about 1.5 m from the spinneret, but this distance can be lengthened when necessary by surrounding the new filaments with a hot tube or hot gas. The temperature in the spinneret should be fairly tightly controlled, and temperature fluctuations in the area where the filaments are solidifying should be avoided in order to avoid fiber instability problems.

Once the filaments have solidified, they can be converged, passed over a spin-finish applicator, and further processed or wound for later processing. The yams produced can be categorized according to their orientation, which correlates loosely to the speed of the spinning process used to produce them. Low oriented spun yarn (LOY) is generally considered to be yarn produced by processes operating at about 500 to about 1500 m/min. Medium oriented spun yam is produced by processes operating at about 1500 to about 2500 m/min. Partially oriented spun yarn (POY) is produced by processes operating at about 2500 to about 4000 m/min. Highly oriented spun yarn (HOY) is obtained from processes operating at about 4000 to about 6000 m/min. Fully oriented spun yarn is obtained at speeds above about 6000 m/min.

The properties and applicability of polyester fibers are strongly affected by the fiber structure, which in turn is heavily dependent on the process parameters used in the fiber formation steps. Processes having an important effect on structure and applicability include the spinning step (where spinning speed or thread line stress is significant), and the hot drawing (or stretching), stress relaxation, and heat setting (or stabilization) processes used to make the fiber.

Orientation of the fibers is a function of thread line stress, which depends upon spinning speed, and is affected by a number of process variables, including distance from the spinnerets. Increasing the take up speed of the spinning process also increases the tension of the filaments, thereby increasing orientation. The speed at which a desired orientation is reached can be lowered by quenching the fibers in water or air. Quenching with air flow across the filaments also allows turbulent flow eddies around the filaments to be swept away, thereby allowing the filaments to act as a coherent bundle.

In drawing processes, the fibers are irreversibly stretched under sufficient stress to elongate them to several times their length. The molecular chains of the fibers become rearranged more nearly parallel to the fiber axis. This increases the orientation of the fibers, and hot drawing of low orientation fibers with relaxation (releasing of stresses of extended molecules, resulting in reduced shrinkage) is a common method for producing oriented semi crystalline fibers. Heat stabilization sets the molecular structure of the fibers providing more dimensional stability. These processes can be controlled to alter the orientation and crystallinity of the fibers produced thereby. For instance, increasing the degree of stretching in the drawing step increases crystallinity and orientation, as well as tensile strength and Young's modulus, but reduces elongation.

Methods for spinning PTT into fiber are disclosed in U.S. Patent Nos. 5,645,782 and 5,662,980, which are hereby incorporated by reference. PTT can be extruded on equipment used for polypropylene or Nylon 6. While the drawing conditions may vary depending on the equipment configuration used, typical polyester draw assists such as hot draw pins or hot rolls can be used. The drawn yarn is generally taken over a hot roll at a temperature of about 160°C to about 180°C, and can be hot air or steam textured at a temperature of about 170°C to about 210°C. PTT yams can be produced having tenacities of around 2 g/d, elongations of about 50%, and bulk levels of around 40%. PTT can be twisted on wide gauge equipment without a secondary finish, and can be run at commercial speeds. Twisting on narrow gauge equipment generally requires that a secondary finish be used. PTT yams can be heat set in autoclaves, or on Suessen and Superba heat setting equipment using standard conditions.

Weaving textiles is typically done with yarn that has been drawn in some way in order to increase its orientation, although the need for drawing and the degree of drawing needed will depend on the amount of orientation developed in the spinning process. For example, HOY and FOY yams may be directly woven without drawing steps. LOY and POY yarn that has been wound directly after spinning must be drawn prior to weaving to increase its orientation. Yarn produced by "flat-yarn" manufacturing processes can be directly used in weaving without further drawing since a drawing step is included in their production. One such process is the draw-twist process, which is typically used with LOY or POY yarns. The yarns are drawn between a draw roll and a feed roll, which is usually heated to above the glass transition temperature. Hot pins are also sometimes used instead of a heated feed roll. Some relaxation is provided by a slower rotating relaxation roll. The draw roll may instead or additionally be heated, or a hot plate provided in the relaxation zone, particularly in the production of textile filament yarn. This can provide annealing of the polymer, allowing it to resist further shrinkage. Another process for producing flat yarn is the spin-draw process, also used with LOY yarns. For textile applications, the spin-draw process involves spinning the yarn into a draw zone with take up speeds of about 4000 to about 6000 m/min. Heated shrouds and heated relaxation stages may also be used, but are not always necessary with textile fibers.

For weaving operations, the yams produced by the spinning and/or drawing steps are followed by processing the yams onto beams that can hold a large number of different yams. However, a drawing technique called warp-drawing, generally used with POY yarn feeds, draws the yam during the beaming operation. This process can produce yams that have superior mechanical properties (e.g., decreased fuzz, lint, and broken filaments) and good dye uniformity.

The draw ratio of the feed and draw rolls is adjusted by varying their relative speeds in order to adjust the break elongation of the fiber.

Fibers may be lubricated, finished, or oiled with materials applied at many different points in the spinning process, but typically early in the process after the fibers have solidified and cooled. Lubricants increase the uniformity and decrease breakage of the fibers. Finishes help to keep the fiber bundle together and decrease stray fibers. These formulations may also contain buffers, anticorrosives, biocides, antioxidants, cohesive agents, viscosity modifiers, and dye assist and dye leveling agents. Polyester fibers are naturally hydrophobic and oleophilic. This gives fabrics woven from these fibers good water repellency and stain resistance to aqueous staining agents. Finishing treatments that impart oleophobic or hydrophilic properties to the fibers can facilitate the removal of oil stains as well.

## Summary of Background

Notwithstanding the long history of carpet and rug production and variety of other existing flooring alternatives, there remains a need for flooring material that exhibits some of the characteristics of carpet and carpet tile, like design versatility, but that shares other characteristics of entirely different floorings. As compared, in particular, to conventional carpet, there is likewise a growing need for flooring structures that minimize the quantity of materials (and therefore natural resources) needed. Finally, it is also desirable to create flooring structures that can exploit fully the sophisticated computer controlled fabric-producing technologies that have recently become available.

To summarize, there exists a need for a new flooring material that:

- is easily and quickly cleaned
- requires low maintenance
- does not telegraph floor irregularities
- is resistant to damage by stiletto heels
- utilizes less energy to produce
- is durable
- easily accommodates wheeled traffic
- is economical to produce
- is recyclable
- is sufficiently hard to resist rapid and extensive deformation by concentrated loads such as those exerted by desk legs and other heavy furniture
- is very attractive
- is slip resistant
- is wet moppable
- has sound dampening qualities superior to conventional hard surface floors
- hides sub floor defects
- is impervious to water penetration
- resists stains and facilitates stain removal
- accommodates wide-ranging and colorful design
- is self-sanitizing, inhibiting microbial growth.

## Summary of the Invention

The present invention provides floor covering having a structure as set out in claim 1. The invention correspondingly provides a method for producing such floor covering, as set out in claim 26. The preferred methods and structures of this invention provide high quality flooring that utilizes sophisticated, self-stabilizing, woven face fabric using relatively heavy "carpet weight" nylon, polyester, PTT or other yarns on modern Jacquard computer controlled looms to produce flat-weave fabrics that are bonded to engineered backing structures. These structures have a relatively small thickness and therefore utilize very modest quantities of yarn with correspondingly modest face weights, but they are very hard wearing. Use of such a woven fabric in flooring and flooring tile permits production of flooring having sophisticated multi-color designs not previously available in any carpet or flooring product, conserves natural resources used for forming fiber, permits production of new flooring designs quickly and, if desired, in small production quantities, and provides flooring and flooring tile that is extremely attractive, relatively inexpensive, and easy to clean, maintain and recycle. Moreover, the woven fabric of the flooring of this invention exhibits more "give" and is therefore more comfortable under foot than conventional "hard" surface flooring materials, but at the same time presents a less deformable surface than a typical carpet structure with upstanding yarn ends or loops. Desired deformation characteristics and "feel" under foot may be achieved utilizing foam, composite and other backing structures together with various yarn and weave combinations.

Important among the alternative backing structures and components described below are use of urethane modified bitumen as a backing layer, use of an optional latex precoat on the fabric layer, and incorporation of an optional antimicrobial in the precoat.

**Brief Description of the Drawings**

Fig. 1 is a schematic side elevation view of roll goods or modular flooring constructed in accordance with this invention.

Fig. 2 is a schematic side elevation view illustrating one method of production of the flooring illustrated in Fig. 1.

Fig. 3 is a perspective view of an alternative flooring tile or section of flooring in accordance with this invention.

Fig. 4 is a schematic side elevation view of an alternative flooring laminating line for practicing this invention.

Fig. 5 is a schematic side elevation view of a second alternative flooring laminating line for practicing this invention.

Fig. 6 is a schematic side elevation view of a third alternative flooring laminating line for practicing this invention.

Fig. 7 is a cross-section of flooring of this invention manufactured as illustrated in Fig. 5.

**Detailed Description of the Drawings**

**I. <u>Flooring Structure</u>**

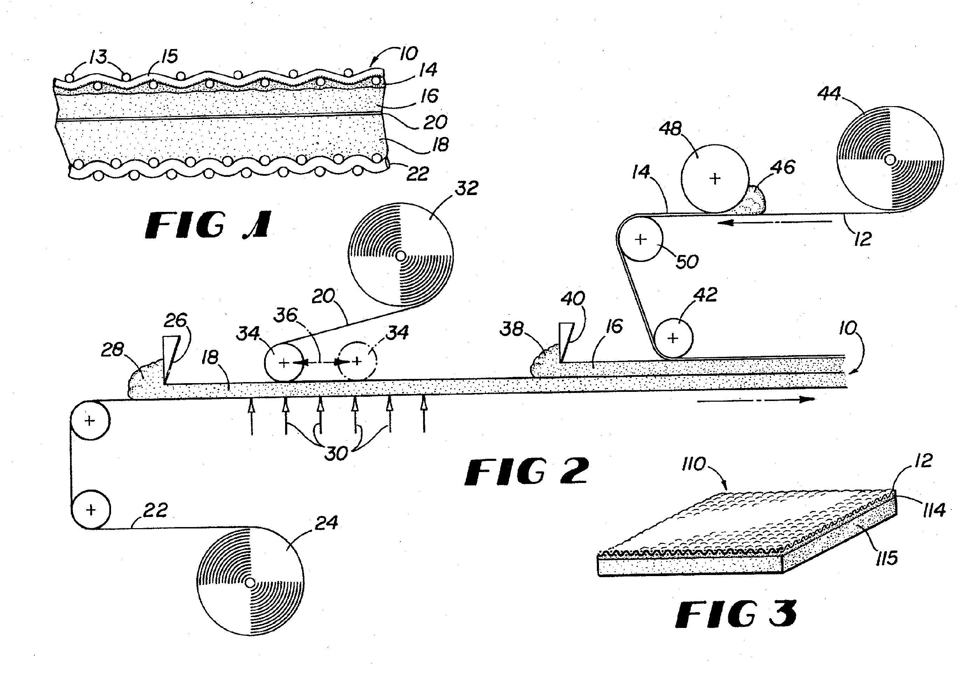

Fig. 1 is a side elevation, schematic view of one embodiment of roll goods or modular flooring 10 constructed in accordance with this invention. Flooring 10 has a top layer of woven fabric 12 that includes yams 13 and 15. A precoat 14 is applied to the underside of fabric 12. Bonded to precoat 14 and fabric 12 is a backing layer 16. A resilient layer 18 lies under backing layer 16, and a web of reinforcement material 20 is positioned between backing layer 16 and resilient layer 18. Finally, the bottom-most layer is a backing fabric 22.

**II. <u>Flooring Production</u>**

Fig. 2 is a schematic side elevation view illustrating one method of production of flooring 10. Beginning at the left side of Fig. 2, fabric backing 22 unrolls from a roll 24 and passes under a doctor blade 26 or other metering device that meters a desired thickness of urethane foam 28 or other material onto backing 22 to form a resilient layer 18 on top of fabric backing 22. Heat, indicated by arrows 30, may be applied to the underside of the advancing web of backing 22 and resilient layer 18 to accelerate curing of resilient layer 18. A web of reinforcement 20 is unrolled from roll 32 and passes around a roller 34 which presses the reinforcement web 22 into contact with the upper surface of resilient layer 18 so that it will be bonded to resilient layer 18. As is indicated by arrow 36, roll 34 may be positioned as desired nearer or further from doctor blade 26, so that reinforcement web 20 may be married to resilient layer 18 in a position selected by reference to the stage of curing of resilient layer 18 that has been achieved.

The advancing composite web of backing 22, resilient layer 18 and reinforcement web 20 then passes under a liquid puddle 38 and a doctor blade 40 or other appropriate metering device to apply a uniform backing layer 16 of urethane modified bitumen or other material that then passes under a press roller 42 together with reinforcement web 20, resilient layer 18 and backing 22.

Meanwhile or earlier, woven fabric 12 unrolls from a roll 44 of woven fabric 12 and passes under a puddle 46 of precoat 14 that is metered by metering roll 48 to deposit a thin layer of precoat 14 on woven fabric 12, which then passes around turn roller 50 and press roller 42. Press roller 42 presses precoat 14 and fabric 12 against the top of backing layer 16 to form flooring 10.

Each of woven fabric 12, precoat 14, backing layer 16, resilient layer 18, reinforcement web 20 and backing fabric 22 are described below in detail.

**III. <u>Flooring Components</u>**

**A. Woven Fabric**

**1. Yarn**

Woven fabric 12 may be produced from numerous yams 13 and 15 and combinations of yams, including, among others, polypropylene, nylon and polyester. Suitable polyesters include the poly(alkylene terephthalates) and poly(alkylene 2,6-naphthalene-dicarboxylates) discussed above. Yams used should be very durable and range in size from approximately 600 denier to 3600 denier (total yarn denier) with low denier per filament (e.g., on the order of 20 denier per filament, although denier per filament may range between about 8 and 80). Yams of higher than 3600 denier may also be used in the weft when desired. Significantly, the yams used in the flooring of the present invention are typically thought of as "carpet-weight" yams, although they are used in looms normally used in weaving the lighter yams conventionally used in computer-controlled jacquard looms for production of upholstery, drapery and other lighter weight fabrics.

Preferred warp yams are approximately 600 denier and preferred weft or fill yams are approximately 2400 denier. One preferred yarn may be manufactured of Shell Oil Company Corterra® PTT polymer, which is extensively described at the following address:

http://www.shellchemicals.com/CMM/WEB/GLOBCHEM.NSF/Products/CORTERRA. However, yarns made from other polyesters described above can also be used, including, e.g., PET, PBT, PDCT, PEN, PBN, PLA, and mixtures of these fibers with each other and with other polyester and non-polyester fibers.

Although both warp and fill yams may be any color, successful edge-to-edge seams during carpet installation may be more successful when the warp yams are a darker color than the fill yarns.

Considerations relevant to selection of yams in conventional carpet are relevant in selection of yarn for woven fabric 12, although some properties have dramatically different significance. For instance, resilience, the ability to regain shape after crushing, is of substantial importance in conventional pile-type carpet with upstanding yam, but is far less important in woven fabric 12 since the yams in fabric 12 lie substantially parallel to the floor. Conversely, longitudinal stability with changes in humidity, moisture and temperature are relatively unimportant in yarn forming carpet pile, but such stability can be quite significant in woven fabric 12 because changes in yarn length can easily influence the size of woven fabric 12. Nylon is a yarn used in many conventional carpet products because it is highly resilient. Although nylon is relatively unstable dimensionally, that is of little concern in conventional carpet. It is easily stained, however, which is an unattractive attribute in any flooring or floor covering application. By contrast, polyester is less prone to staining than nylon, less resilient and more stable. PTT fibers, in particular, are easily dyed at atmospheric boil, yet resist staining by acidic dyes and hot disperse dyes.

A wide variety of polyesters, nylons, and polyolefins can be used in the present invention. Yarns spun from Corterra® PTT polymer have been found to be particularly suitable because of their combination of desirable physical properties, dye ability, and resistance to staining. PTT fibers produced by other manufacturers, or using different PTT formulations, would also be very suitable for the present invention. Properties of exemplary yams suitable for the present invention are provided below in Table 1. However, yams having different properties, and in particular yams having higher or lower degrees of orientation, tenacity, elongation, and modulus, may also be used in the present invention.

TABLE 1.

| PROPERTIES FOR POLYESTER FIBERS SUITABLE FOR INVENTION | | |
|---|---|---|
| PROPERTY | MATERIAL | |
| | NYLON | PTT |
| FIBER PROPERTIES | | |
| Orientation | Medium | Medium |
| | | |
| Tenacity | 2.5-3.0 g/den | 1.8 - 2.0 g/den |
| | | |
| Elongation | 35-55% | 35-55% |
| | | |
| Modulus | 12.5 g/den | 6 g/den |
| | | |
| Evenness | < 1.0 | <1.0 |
| | | |
| Dye uptake | Good at atmospheric boil | Good at atmospheric boil |
| | | |
| Exemplary manufacturer and trade names | NYLON 6; NYLON 66 | CORTERRA (Shell) |

## 2. Weaving Equipment and Weaving Patterns

A variety of looms known to those skilled in the art of weaving may be used to weave fabric 12, including looms that employ shuttles to carry the weft yarn across the full fabric width and needle insertion looms that use a needle to carry the weft yarn half way and pass it to a second needle inserted from the other side.

A particular loom usable for practice of the this invention is Dornier Weaving Machine Model HTVS8/J available from Lindauer Dornier GmbH, Rickenbacher Strasse 119, Lindau, Germany. Such a loom may be used with a Staubli CX 880/2688 electronic Jacquard weaving machine and harness available from Staubli Corporation, Duncan, South Carolina. This equipment permits extremely sophisticated designs to be woven, including designs requiring numerous weft yarn colors and frequent weft yarn color changes.

Sophisticated patterns possible on such looms include patterns that have the appearance of depth and of sculptured or three dimensional structures in an essentially flat product. Such patterns are possible, in part, because a wide variety of different colors of fill yarn are usable under control of the loom computer. Color selection may be made from a multi-colored weft bank, containing up to sixteen or more colors, as contrasted with conventional carpet and rug production, in which color selection or insertion comes from warp yarns. Because the weave is essentially flat, planar stability and integrity is provided by the face fabric 12, thereby eliminating the need for: (a) a primary backing fabric or woven backing structure, as is typically required in conventional carpet and rug constructions or (b) the paper or other backing typically utilized in vinyl sheet flooring.

Extremely sophisticated designs may be achieved by using a "tapestry warp." In one example of such a warp, 6,176 warp yarn ends are yellow, green, red, and blue, one color after another across the entire warp (e. g., a first warp yarn is yellow, the next is green, the next red, the next blue, the next yellow, and so on, repeating these four colors across the entire warp). With these warp colors, white fill yams can be used to "shade" the warp colors lighter, and black fill yams can be used to "shade" the warp colors darker. Any of the four warp colors can be used to "tie down" the fill yams, making that warp yam visible. Not unlike the three colors used in a television picture tube to create all desired colors, the warp yams can be thought of as available "pixels" of shadable and mixable color. Colored fill yams can also be used in addition to black and white fill yarns. The availability of shadable and mixable warp yarn colors and multiple fill yarn colors makes possible enormously varied and sophisticated designs and patterns not previously available in carpet or other conventional floor coverings.

Non-matchable patterns are sometimes desired and may be produced, making it possible to juxtaposition pieces of flooring 10 (cut roll goods or tiles or modules) cut at any point in the flooring without the need to move the juxtaposed pieces relative to each other to achieve an aesthetically pleasing appearance.

## 3. Edge Conditions

Where flooring 10 is cut into flooring tiles, such as eighteen inch or one-half meter squares, or where an edge of flooring 10 is exposed for some other reason, the appearance and condition of the edge can be important. In particular, it is important under such circumstances for individual yams not to blossom and for woven yams to maintain their positions and not "ravel" or otherwise become unsightly.

Several approaches may be utilized to avoid such "edge ravel." For instance, a variety of adhesive and other materials may be applied to the yarns before weaving or to the woven fabric 12 or flooring 10 to bond yarns together. The yarns may also be chemically or thermally melted to cause adjacent yams or portions of adjacent yams to fuse. If different yams are used in the same woven fabric 12 that have different melting temperatures, a controlled heat source that raises woven fabric 12 above the melting point of one or more but not all yams in fabric 12 may be used selectively to melt or partially melt and bond the lower melting temperature yams without melting the higher melting temperature yarn.

Similarly, fabric 12 can use bi-component fibers or yams having different materials in a core and sheath, or having two different materials that are co-extruded to produce a yarn having different materials side-by-side. If the two yarn components have different melting points, elevation of the temperature to a temperature above the melting point of one component but below the melting point of the other component will fuse melted material in adjacent yarns, thereby stabilizing yarn positions, without unduly affecting the structure of fabric 12.

Edge ravel can also be addressed by applying a coating to the edge of the fabric 12 with, for example, a foam applicator so that the fabric edge sealer soaks into fabric 12 to a distance on the order of approximately 6.3mm (1/4 inch) from the edge of fabric 12. The objective is to bind adjacent fiber and yarn ends together and to at least the yarn parallel and closest to the edge. Fabric sealer usable for this coating can be, for instance, water based urethanes such as unsaturated or acrylated urethane polymers and oligomers, polyester urethanes, or polyfunctional acrylate monomers. Polyester urethanes, e.g., those obtained by reacting polycarboxylic acids with diols and acrylic acid to form polyester acrylates, which are then reacted with polyisocyanates, have been found to be suitable. For example, the fabric sealer may contain a polyester urethane (Stahl RU41 R065, 87% by weight), an optional cross linker (Stahl XR2500 polyfunctional aziridine, 4% by weight) and water (9% by weight). The inclusion of a cross linker can materially decrease the drying time of the sealer.

A seam sealer such as Interface Seam Sealer 90 can be applied between adjacent edges of the backing structure to provide a water-tight seal therebetween.

### 4. Dimensional Stability

Although the woven fabric 12 of flooring 10 presents some advantages in stability as compared to some prior fabric materials used in flooring, fabric 12 is nevertheless somewhat unstable with changes in environmental conditions. Sources of instability include the yarn 13 and 15 from which fabric 12 is made and the weave. Instability associated with these factors can manifest itself in up curled edges or overall shrinkage of fabric 12 (for instance, a square piece of fabric 12 can become rectangular instead of square because of shrinkage). This is the reason the backing design is critical. Flooring 10, particularly in the form of a tile or module, must be able to lie flat on the floor and not shrink enough to break seams in a broadloom product or cause gapping in a tile product.

Flooring 10 that will lie flat on the floor can be produced by utilizing reinforcement layer 20 as a "no-slip" or "zero-slip" layer. This is possible if reinforcement layer 20 is a layer of fiberglass as described below, because such fiberglass is extremely stable, particularly in comparison to the other components of flooring 10.

Dimensional stability is provided by placing reinforcing fiberglass into a suitable backing layer in a way that balances the rate of change of "upcurl strain," or $e_u$, with the rate of change of "doming strain," $e_d$, as atmospheric conditions, such as temperature and humidity, change with time. Upcurl strain is the displacement of the edges of the floor covering material upward, and is caused by a contraction of the floor covering material in the upper part of the material resulting from a tensile force. Doming strain is the displacement of the edges of the floor covering material downward (resulting in an upward displacement of the more central portions of the floor covering material into a dome-like shape). It is also the result of a tensile force contracting a portion of the floor covering material, however the doming force operates on the lower portions of the material.

The rate of change of upcurl strain of the composite material with changing atmospheric conditions can be described by the following equation:

$$\frac{de_u}{dAC} = \frac{d}{dAC}\left[\frac{T_u}{(A_a * E_a)}\right]$$

where $e_u$ is the upcurl strain, AC signifies atmospheric conditions, $T_u$ is the tensioning force causing the upcurl, $A_a$ is the area above layer 20, and $E_a$ is the elastic modulus of the backing material above layer 20.

The rate of change of doming strain of the composite material with changing atmospheric conditions can be described by the following equation:

$$\frac{De_d}{dAC} = \frac{d}{dAC}\left[\frac{T_d}{(A_b * E_b)}\right]$$

where $e_d$ is the doming strain, AC is as defined above, $T_d$ is the tensioning force causing the doming, $A_b$ is the area below the layer 20, and $E_b$ is the elastic modulus of the material below layer 20.

The heat shrinkage properties of material below layer 20, e.g., polypropylene, can be used to offset the shrinkage of the fabric above layer 20. In other words, by placing the appropriate material below layer 20 at the appropriate time in the production process, the rate of change of $A_b$ can be decreased, thereby increasing the rate of change of the doming strain. When the rate of change of the doming strain is maintained at a level at or above the rate of change of upcurl strain, the resulting material is dimensionally stable, and can withstand normal atmospheric changes. Utilizing nylon for yams 13 and 15, it may be impossible to maintain this relationship in all environmental conditions encountered in a typical location where flooring 10 is used. However, it may be possible to maintain this relationship in all environmental conditions using PTT for yams 13 and 15.

With the equations set forth above in mind, it is possible to use the tendency of polypropylene in fabric backing 22 (below layer 20) to shrink in the presence of heat to offset the propensity of fabric 12 (above layer 20) to shrink. By choosing the fabric backing 22 carefully and placing the layer 20 in the composite structure 10 at the right time during the manufacturing process, it is possible offset the shrinkage tendency in the fabric 12. For example, fabric backing 22, which may be made of a woven heat-shrinkable polyolefin, can be placed first, and covered with a polyurethane foam. The exothermic heat of reaction of the isocyanate and the polyol heat the polyolefin, causing some shrinkage to occur. By placing the layer 20 onto the polyurethane foam at the appropriate time, the shrinkage of the polyolefin can be effectively "frozen" and balanced against the forces imposed on the composite by the materials added "above" the layer 20. The determination of the appropriate time for adding the layer 20 can be determined empirically by varying the time of application of layer 20 (which should be understood to include varying the point in the production process at which layer 20 is applied), assembling the composites, and testing them under varying atmospheric conditions for dimensional stability, e.g. by measuring the change in area and/or the net upcurl or doming force or strain experienced by the composite. Using this method of controlling the assembly of the composite material allows the yarn 13 and 15 in fabric 12 to go through normal physical changes in response to atmospheric changes without being affected enough to cause the entire composite flooring 10 to be dimensionally unstable.

### Example 1- Woven Fabric

One woven fabric 12 usable to produce flooring 10 is woven on the above described Dornier loom and Jacquard weaving machine and harness using warp yam consisting of PTT 10 denier per filament 600 denier yarn. All warp yarn is black to enhance "seam ability." Weft or fill yarn is multiple colors of 10 denier per filament 2400 denier nylon, or preferably PTT, yarn. As noted above, more sophisticated aesthetic designs can be achieved using, as an alternative to all black warp yarns, a tapestry warp of yellow, green, red and blue yarns. As also noted above, fill yams may include white and black yams as well as colored yarns.

### B. Precoat

Precoat 14 may serve three or more functions. Precoat 14 may bond yams within fabric 12 to each other, thereby stabilizing fabric 12 and assisting in preventing edge ravel; it may provide a material to which the material of backing layer 16 bonds more readily than it bonds to fabric 12, and it may serve as a carrier and reservoir for antimicrobial or other materials that are intended migrate into and through fabric 10 as well as for flame retardant materials.
Although precoat 14 may serve as an adhesive to bond fabric 12 to backing layer 16, it may be desirable for the bond to be sufficiently weak that fabric 12 can be stripped off of backing layer 16 in order to recycle the components of flooring 10.
Precoat 14 may be a highly frothed ethylene vinyl acetate or acrylic latex to which is added an antimicrobial such at Intersept® antimicrobial, which is available from Interface Research Corporation, Kennesaw, Georgia and is included at a concentration of approximately slightly less than 7% by weight of the weight of the face yarn fibers of the flooring 10. As an example of the frothing, the mixture may be frothed with a blow ratio of 2.8, which means that the cup weight of the unfrothed mixture is 2.8 times that of the frothed mixture. Precoat 14 may be applied in a very thin layer from which the water evaporates quickly, leaving a precoat layer weighing on the order of approximately 61.0 - 118.7 $g/m^2$ (dry weight) (1.8 - 3.5 ounces per square yard of flooring 10), and preferably approximately 61.0 $g/m^2$ (1.8 ounces per square yard). The following Example 2 sets forth a usable precoat formulation.

### Example 2 - Precoat

| Parts per hundred resin (phr) | Component |
| --- | --- |
| 55 | E-190 base latex from National Starch[1] |
| 55 | water |
| 1 | sage (natural foaming agent) |
| 2.2 | Para-Chem 277 thickener[2] |
| 1.5 | Intersept® Antimicrobial[3] |
| 2.2 | Eagleban SP-120 (phosphorus/bromine dispersion flame retardant)[4] |

[1]National Starch and Chemical Company, 195 Ottley Drive, N.E., Atlanta, GA 30324.
[2]Para-Chem, Hwy 14 / PO Box 127, Simpsonville, South Carolina 29681.
[3]Interface Inc., 2589 Paces Ferry Rd., Atlanta, GA 30339. Intersept is a phosphorus/amine containing antimicrobial composition.
[4]Eagle Systems Corporation, P.O. Box 888018, Atlanta, GA 30356.

Precoat 14 is direct coated onto fabric 12 with an overdriven, weighted roll with a roll to web ratio of 1.3 (meaning that the roll surface speed is 1.3 times the surface speed of the web in contact with the roll).

**C. Fabric Stabilizing Layer**

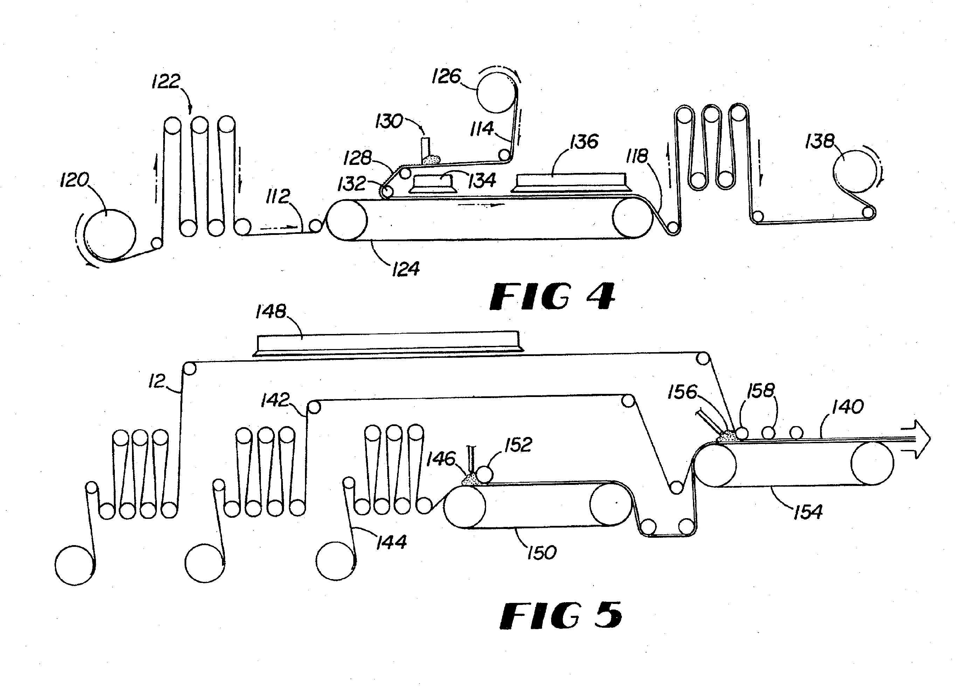

If desired, a fabric 12 stabilizing layer (not shown in Fig. 1 but shown in Figs. 3 and 7) of fiberglass (such as DURA-GLASS® 7613 non-woven fiberglass fleece sold by Schuller Mats & Reinforcements, P. O. Box 517, Toledo, Ohio 43687-0517) may be bonded to the underside of fabric 12 with precoat 14 or an alternative adhesive material.

**D. Backing Layer**

Backing layer 16 may be a wide variety of materials, depending on the properties desired. For instance, in may be any of a wide variety of solid, semisolid, resilient, and foamed plastic and thermoplastic materials, including natural and synthetic rubber, polyvinyl chloride, polyurethane, atactic polypropylene and hot melts, such as low density to high density EVA hot melts, polyethylene and others.
As an alternative to these and other conventional backing materials, backing layer 16 may be a urethane-modified bitumen composition chemically similar to the bitumen including a thermosetting amount of, e.g., a hydroxyl-terminated polybutadienepolyisocyanate urethane polymer disclosed for use as an adhesive in U. S. Patent No. 5,096,764 to Terry *et al.*, which is incorporated herein in its entirety by reference. While backing layer 16 has adhesive properties in this application, it is utilized not merely as an adhesive but to provide desired weight and other physical properties. Among those properties provided by this urethane modified bitumen composition, it is pliable, can be stretched and has some memory.
Backing layer 16 may be any desired thickness, depending on the service and other requirements of flooring 10. It should typically range in thickness between approximately 0.76 and 1.52 mm (30 to 60 mils), should preferably be between 0.76 and 1.01 mm (30 to 40 mils), and most preferably should be approximately 0.81 mm (32 mils) thick. The weight of backing layer 16 will also vary widely depending on the material chosen and service requirements. Typical weights of backing layer 16, if modified bitumen as described below is used, will range between approximately 339 and 2034 $g/m^2$ (10 to 60 ounces per square yard). A preferred weight is approximately 1085 $g/m^2$ (32 ounces per square yard.)
A usable composition of modified bitumen for layer 14 is described in the following Example 3, which provides the amounts and identity of starting materials combined and reacted to form the urethane-modified bitumen used in the backing of the present invention.

**Example 3 -- Backing Layer**

| Component | Preferred number of parts per hundred bitumen | Range in wt% based on final composition |
|---|---|---|
| Propane D Asphalt (Shell bitumen) | 100 | 25-40, more particularly 27-33 |
| Calcium Carbonate | 175 | 45-65, more particularly, 55-65 |
| R45HT Poly BD (Atochem polybutadiene polyol) | 31.95 | 3-20, more particularly 4-16 |
| 143L (Dow Chemical Co. diphenylmethane diisocyanate) | 4.8 | 0.4-3.5, more particularly 0.6-2.4 |

The components may vary by as much as ± 10 pph. The amount of isocyanate added is generally proportional to the amount of polyol used, generally around 15%. The formulation set forth above can be modified by adding a catalyst for the reaction between the polyol and the polyisocyanate, and/or by substituting aluminum trihydrate (ATH) for calcium carbonate up to approximately twenty-five percent (25%) of the calcium carbonate. For instance, a backing layer formed by reacting 100 parts Shell Propane D Asphalt, about 43.75 parts aluminum trihydrate, 131.25 parts calcium carbonate, 32.01 parts R45HT Poly BD, and 4.785 parts Iso 265 diisocyanate would be suitable for use as a backing in the present invention.

### E. Reinforcement Web

Reinforcement web 20 stiffens and stabilizes flooring 10 and may be a number of different materials such as fiberglass, ceramic fibers, polyester, a PET/polyester blend or a PET/nylon blend. Among these alternatives, a preferred material for web 20 is non-woven fiberglass fleece, such as Schuller 7613 fiberglass fleece weighing approximately 44.1 g/m$^2$ (1.3 ounces per square yard).

### F. Resilient Layer

Like backing layer 16, resilient layer 18 may also be a wide variety of materials, depending on the properties desired. For instance, it may be any of a wide variety of solid, semi-solid, resilient, and foamed plastic and thermoplastic materials, including natural and synthetic rubber, polyvinyl chloride, polyurethane, atactic polypropylene and the modified bitumen described above. Resilient layer 18 may also have a variety of different densities, weights and thicknesses, depending on the properties desired. A preferred material for resilient layer 18 is polyurethane foam on the order, for instance, of approximately 3.18mm (125 mils) in thickness. A usable urethane foam formulation is set forth in the following Example 4. (Textile Rubber & Chemical Company is located at 1300 Tiarco Drive, Dalton, Georgia.)

### Example 4 - Resilient Layer

| Component | Parts |
|---|---|
| Textile Rubber and Chemical Co. FP-C433 polyol | 6.05 |
| Textile Rubber and Chemical Co. C-344 KD isocyanate | 1 |

### G. Fabric Backing

Fabric backing 22 may be selected from a wide variety of conventional synthetic and natural backing materials, including various woven and non-woven fabrics. A preferred material for backing 22 is ActionBac® 3872 woven polypropylene carpet backing available from Amoco Corporation.
Flooring 10 has good physical properties. Among them:

- wear resistance is good
- stain resistance is good
- soil resistance is excellent
- flame resistance is good
- smoke emission is low
- resilience is comparable to conventional commercial carpet
- liquid permeability is essentially zero
- "clean ability" is excellent; the produce is "moppable"
- stability is good, particularly when using polyester family fibers
- sound attenuation is good (better than conventional hard surface flooring).

### IV. Alternative Embodiments

### A. Flooring Structure

Fig. 3 illustrates a section of flooring or flooring tile 110 of this invention comprising a woven fabric 12 bonded to a stabilizing substrate 114, which is in turn bonded to a secondary backing 115 that might, for instance, be a latex or urethane foam or a solid polyvinyl chloride layer within which additional materials such as fillers and additional strengthening, stiffening and stabilizing layers of fiberglass or other materials may also be incorporated.
In each flooring structure 110 of this invention, the fabric 12 is woven, typically utilizing nylon, polypropylene or polyester yams, and preferably on a computer controlled Jacquard loom.

## B. Flooring Production

Fig. 4 is a side elevation, schematized view of apparatus for producing a "face cloth" 118 in accordance with this invention. Face cloth 118 has a woven fabric 112 bonded to a stabilizing substrate or layer 114 with polyvinyl chloride adhesive 128. A roll 120 of woven fabric 112 is unwound into an accumulator 122 and travels from there to a conveyor belt 124 on which woven fabric 112 lies as it moves from left to right in Fig. 2. Meanwhile, stabilizing layer 114 is unwound from roll 26 and initially travels right to left in Fig. 4 in order for a layer of polyvinyl chloride 128 to be applied to it by a vinyl applicator 130. Vinyl 128 may typically be applied to stabilizing layer 114 in a layer approximating 170 to 3390 g/m$^2$ (5 to 100 ounces per square yard), preferably 339 to 1700 g/m$^2$ (10 to 50 ounces per square yard), and most preferably 678 to 1020 g/m$^2$ (20 to 30 ounces per square yard). Stabilizing layer 114 with polyvinyl chloride 128 applied thereto is married to woven fabric 12 by, for instance, pinching stabilizing layer 114 and woven fabric 12 between a roller 132 and conveyor belt 124. The thus-married composite of woven fabric 12 and stabilizing layer 114 with polyvinyl chloride 128 there between then passes through a heating zone 134 and a cooling zone 136 to produce composite face cloth 118 that may be accumulated in a roll 138.

An alternative laminated flooring 140 may be produced as is illustrated in Fig. 5. Flooring 140 includes a woven fabric 12 bonded to a fiberglass layer 142 utilizing urethane-modified bitumen 156. Fiberglass layer 142 is in turn bonded with polyurethane foam 146 to a secondary backing 144 (such as a woven polypropylene backing like Action-Bac® secondary backing available from Amoco Corporation).

As may be seen in Fig. 5, woven fabric 12 travels left to right and may pass through a preconditioning stage 148 where woven fabric 12 is subjected to preconditioning by heating and or steaming to normalize or pre-shrink the material. Fiberglass layer 142, which may typically be a woven or non-woven fleece or net substrate, also travels left to right at the same time that backing 144 moves in the same direction. Backing 144 passes onto a conveyor belt 150 where polyurethane foam 146 is deposited and gauged with a roller, knife, doctor blade or other gauging means 152 to provide a polyurethane foam layer of desired thickness. Backing 144 with polyurethane layer 146 is then brought into contact with fiberglass layer 142, which can occur on conveyor belt 150 or, as is illustrated in Fig. 5, may occur on a second conveyor belt 154. Urethane-modified bitumen adhesive 156 is then deposited on fiberglass layer 142, and woven fabric 12 is pressed into contact with adhesive 156 under lamination rollers 158 to bond woven fabric 12 to fiberglass layer 142. Some of the adhesive material 156 may also be forced through fiberglass layer 142 into contact with polyurethane foam 146 on backing layer 144. Alternatively, polyurethane foam 146 contacts fiberglass layer 142 while foam 146 is still tacky, thereby bonding to layer 142. Woven fabric 12, fiberglass layer 142, foam 146 and backing layer 144 are then bonded into a composite flooring structure 140.

Urethane-modified bitumen adhesive 156 may be a bitumen modified to possess thermosetting properties, such as bitumens including a thermosetting amount of, e.g., a hydroxyl-terminated polybutadienepolyisocyanate urethane polymer. Typical suitable urethane-modified bitumen adhesives are disclosed in U.S. Patent No. 5,096,7164 to Terry *et al* and described above.

Fig. 7 illustrates a cross section of the composite flooring structure 140 manufactured as illustrated in Fig. 5. Woven top cloth 12 is bonded to fiberglass 142 with urethane-modified bitumen 156. Fiberglass 142 lies above polyurethane foam 146 and is backed with a woven polypropylene secondary backing 144.

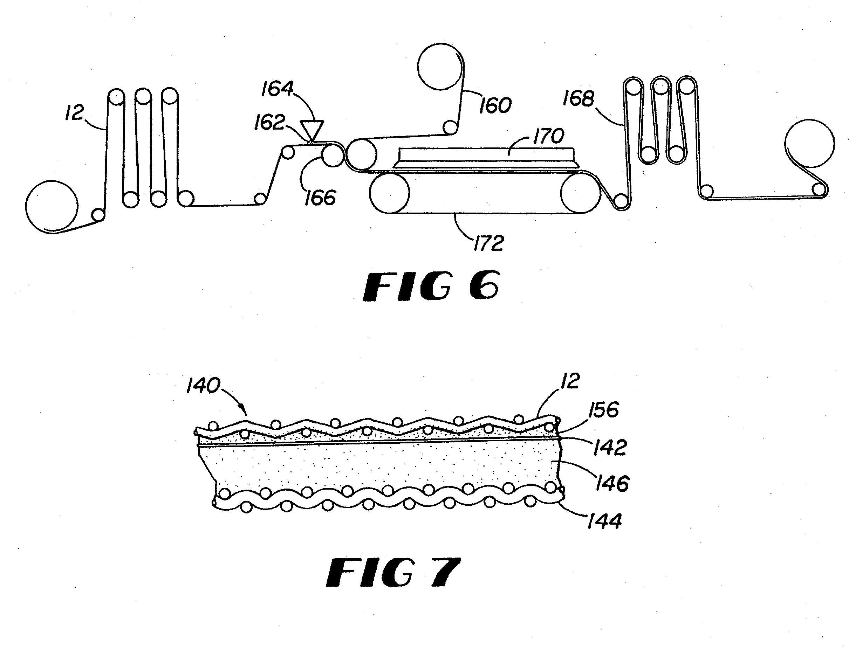

An alternative face cloth production technique is illustrated in Fig. 6, where woven fabric 12 is bonded to stabilizing substrate 160 with hot melt adhesive 162. Woven fabric 12 travels left to right in Fig. 6, where it passes under a hot melt adhesive applicator 164. Meanwhile, stabilizing substrate 160 initially travels down and right to left in Fig. 6, where it is married to woven fabric 12 with hot melt adhesive 162. This marriage occurs as woven fabric 12, hot melt adhesive 162 and stabilizing substrate 160 pass between laminating rollers 166. Hot melt adhesive laminated face cloth 168 than travels through a cooling zone 170, where it may travel on top of a conveyor belt 172. After hot melt adhesive 162 is adequately solidified, face cloth 168 may be rolled or, alternatively, pass directly into additional processing apparatus that may, for instance, bond a secondary backing thereto. Hot melt adhesive 162 may be typically a nylon, polypropylene, polyester, acrylic or bitumen-based adhesive, and stabilizing substrate 160 may be of glass, polypropylene, nylon, natural fiber or polyester.

## Claims

1.  A composite face cloth for a stabilized floor covering **characterised in that** the face cloth (118) comprises a woven fabric top layer (12,112) bonded to a stabilizing substrate (114).

2.  A face cloth composite as claimed in claim 1 and further **characterised in that** the woven fabric top layer (12, 112) comprises nylon, polypropylene or polyester yarn; and the stabilizing substrate (114) comprises fiberglass; non-woven fiberglass fleece; ceramic fibers, polyester, a PET/polyester blend or a PET/nylon blend; glass, polypropylene, nylon, natural fiber.

3. A face cloth composite as claimed in claim 1 or claim 2 and further **characterised in that** the woven fabric top layer (12, 112) comprises woven fabric top layer (12) comprises polyester yarn (13, 15).

4. A face cloth composite as claimed in claim 3 and further **characterised in that** the polyester is selected from the group of polyethylene terephthalate, polybutylene terephthalate, poly(trimethylene terephthalate), poly(1,4-dimethylenecyclohexane terephthalate), poly(ethylene 2,6-naphthalene-dicarboxylate), and polylactic acid.

5. A face cloth composite as claimed in any of claim 1 to 4 and further **characterised in that** the stabilizing substrate (114) comprises a web of non-woven fiberglass fleece.

6. A face cloth composite as claimed in claim 5 and further **characterised in that** the fiberglass fleece (114) weighs approximately 0.04 Kg/M$^2$ (1.3 ounces per square yard).

7. A face cloth composite as claimed in any of claims 1 to 6 and further **characterised in that** the woven fabric top layer (12,112) is bonded to the stabilizing substrate (114) with polyvinyl chloride adhesive (128).

8. A method for producing a face cloth composite for a stabilized floor covering **characterised by** the steps of:-

   (a) applying a layer (128) of adhesive to a stabilizing substrate (114);
   (b) marrying the stabilizing substrate with adhesive to a layer of woven fabric (12,112);
   (c) passing the thus-married composite of woven fabric and stabilizing substrate through a heating zone (134) and a cooling zone (136) to produce composite face cloth (118); and,
   (d) accumulating the composite face cloth in a roll (138).

9. A method as claimed in claim 8 and further **characterised in that** the woven fabric top layer (12, 112) comprises nylon, polypropylene or polyester yarn; and the stabilizing substrate (114) comprises fiberglass; non-woven fiberglass fleece; ceramic fibers, polyester, a PET/polyester blend or a PET/nylon blend; glass, polypropylene, nylon, natural fiber.

10. A method as claimed in claim 9 and further **characterised in that** the adhesive (128) is polyvinyl chloride.

11. A method as claimed in claim 10 and further **characterised in that** the polyvinyl chloride (128) is applied to the stabilizing substrate (114) by a vinyl applicator (130) in a layer approximately 0.15 to 3.00 Kg/M$^2$ (5 to 100 ounces per square yard).

12. A method as claimed in claim 11 and further **characterised in that** the polyvinyl chloride layer (128) is approximately 0.30 to 1.50 Kg/M$^2$ (10 to 50 ounces per square yard).

13. A method as claimed in claim 11 and further **characterised in that** the polyvinyl chloride layer (128) is approximately 0.60 to 0.90 Kg/M$^2$ (20 to 50 ounces per square yard).

FIG 1

FIG 2

FIG 3

FIG 4

FIG 5

EP 1 533 114 A2

**FIG 6**

**FIG 7**

EP 1 533 114 A2